# EUROPEAN PATENT SPECIFICATION

(11) **EP 0 370 772 B1**
(45) Date of publication and mention of the grant of the patent: **18.01.1995**
(21) Application number: 89312085.7
(22) Date of filing: 21.11.1989
(51) Int. Cl.: G11B 20/10, G11B 20/24

(54) **Digital signal reproducing apparatus**
Wiedergabe-Anordnung für digitale Signale
Appareil de reproduction de signaux numériques

(30) Priority: 22.11.1988 JP 295650/88
(43) Date of publication of application: 30.05.1990
(73) Proprietor: SONY CORPORATION, Tokyo 141 (JP)
(72) Inventor: Kanota, Keiji c/o Patents Division, Shinagawa-ku Tokyo 141 (JP); Inoue, Hajime c/o Patents Division, Shinagawa-ku Tokyo 141 (JP); Seki, Takahito c/o Patents Division, Shinagawa-ku Tokyo 141 (JP)
(74) Representative: Pilch, Adam John Michael

(56) References cited:
- JOURNAL OF THE INSTITUTION OF ELECTRONIC AND RADIO ENGINEERS, vol. 55, no. 6,June 1985, pages 229-236; C.H. COLEMAN et al.: "High data rate magneticrecording in a single channel"
- IBM TECHNICAL DISCLOSURE BULLETIN, vol. 28, no. 11, April 1986, pages 4857-4858, IBM Corp., New York, US; "Adaptive symmetrical interference equalization"
- IEEE TRANSACTIONS ON MAGNETICS, vol. MAG-23, no. 5, part II of 2 parts,September 1987, pages 3672-3674; S. MITA et al.: "Automatic equalizer for digital magnetic recording systems"

## Description

This invention relates to digital signal reproducing apparatus, and in particular to digital signal regenerating or recovery apparatus.

In a typical transmission system wherein digital information from a source is received at another location and/or at another time, digital data is usually represented by a particular code. Examples of codes that have been used in various types of digital transmission systems include (1,7) codes, MFM codes, Manchester codes, and the like. Many of these codes have been developed for and continue to be quite useful in storage systems, such as magnetic digital storage devices. Such codes have been developed to prevent the original, useful digital data from being obliterated or rendered non-recoverable by the inherent characteristics of the transmission (or storage or recording) system.

It is expected that digital data will be subject to distortion as it is transmitted over a typical digital transmission system. For example, in the environment of digital recording, it is not unusual for digital data to be recorded serially bit by bit, and for distortion and interference, such as interbit interference, to be experienced due to the inherent magnetic characteristics of the recording system, particularly when the digital data is played back. To account for such distortion, the encoded digital signals are often pre-coded before being transmitted (or recorded), such that predicted distortion or interference will complement the pre-coding. Hence, the combination of the pre-coding and inherent distortion characteristics will result in a digital signal from which the original digital information can be easily recovered.

The receiver (or data reproducer) of a digital transmission system is often provided with a linear equaliser which carries out high frequency compensation on the received (or reproduced) digital signal. Of course, this compensation is intended to match or balance the characteristics of the transmission system. The compensated digital signal is then decoded to recover the original digital information. One type of decoder that can be used when superimposed noise is expected is a so-called Viterbi decoder which functions to sample the compensated signal, correlate the resultant samples and produce digital information as a function of such correlation. A Viterbi decoder is described in "Viterbi Algorithm," by G.D. Forney, Jr., Proc. of IEEE, Vol. 61, No. 3, March 1973, p. 268 et seq. In an environment wherein so-called white Gaussian noise is expected, this type of correlation decoder operates satisfactorily. This is because white noise is not generally correlatable with useful information.

However, if substantial high frequency noise is present on the received (or reproduced) digital signal, high frequency compensation tends to emphasise not only the useful digital signals but also the superimposed high frequency noise. Since high frequency noise correlates with useful digital information, correlation decoding is subject to errors, thereby degrading the error rate of the overall digital transmission system.

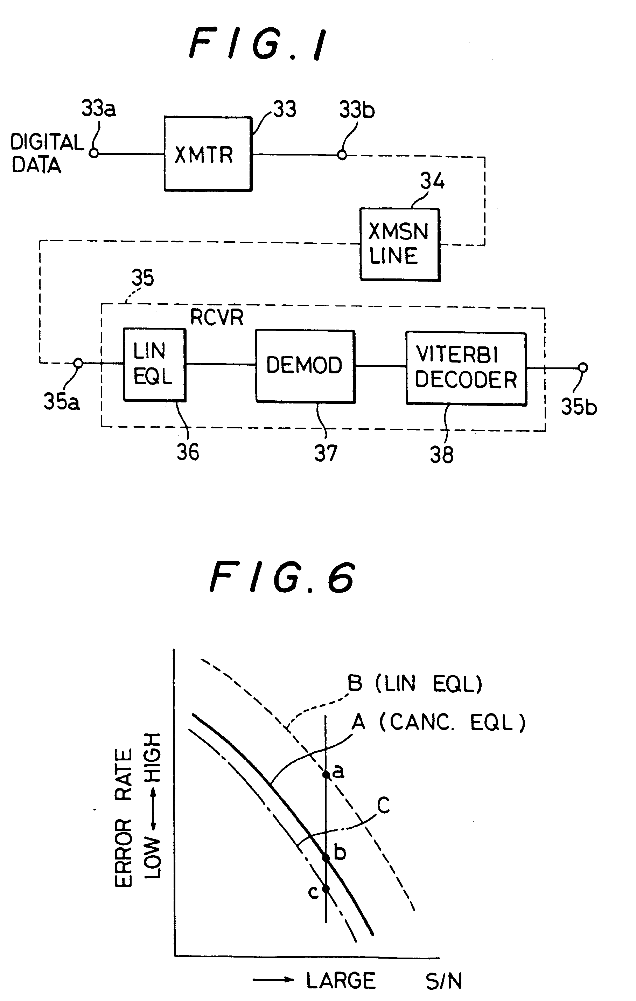

IEEE TRANSACTIONS ON MAGNETICS, vol. MAG-23, no. 5, Part II of 2 parts, Sept. 1987, pages 3672 to 3674; S. Mita et al.: "Automatic equaliser for digital magnetic recording systems", which is referred to as technological background discloses an adaptive automatic equalising apparatus for use in digital magnetic recording systems. In this apparatus, an input signal is applied to a pre-equaliser (Fig. 1). An output signal from the pre-equaliser is sent to a shift register via a first decision circuit, and stages of the shift register are connected to one input of a subtracter. The same output signal from the pre-equaliser is also sent directly to another input of the subtracter. A replica of the intersymbol interference contained in the pre-equalised signal is subtracted from the pre-equalised signal.

According to the present invention there is provided apparatus for regenerating a coded digital signal, the apparatus comprising:
a linear equaliser for emphasising high frequency components in an input digital signal representing said coded digital signal to produce a high frequency compensated digital signal; and
a correlation decoder for recovering the original digital signal;
the apparatus being characterised by:
extracting means for extracting intercode interference from said high frequency compensated digital signal; and
subtracting means for subtracting the intercode interference from the input digital signal to produce a waveform equalised signal;
the correlation decoder being operative to recover the original digital signal by producing and correlating samples of said waveform equalised signal.

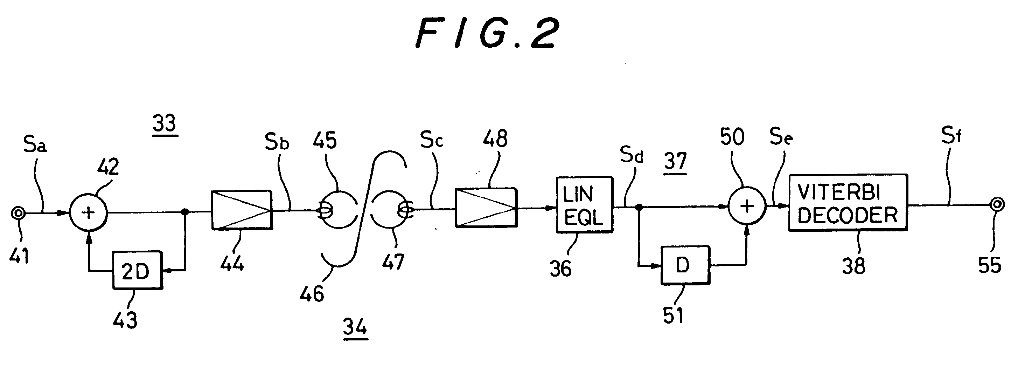

With the apparatus of the invention, the input digital signal is not (as in the previously proposed apparatus described above, and described in more detail below with reference to Figure 2) passed to the correlation decoder via the linear equaliser for emphasising the high frequency components therein. Accordingly, the signal applied to the correlation decoder, namely the waveform equalised signal, is not accompanied by emphasised high frequency noise produced by the linear equaliser. Thus, high frequency noise in the signal applied to the correlation decoder is minimised, as compared to the previously proposed apparatus, whereby the above-mentioned problem of an increase in the error rate of a correlation decoder in the presence of high frequency noise (as opposed to white noise) is reduced.

The extracting means preferably includes a comparator which receives the high frequency compensated digital signal and compares it to a threshold level to produce a comparator output. A plural stage shift register receives and shifts the comparator output through its stages, and the contents of selected stages of the shift register are summed.

The threshold level to which the high frequency compensated digital signal is compared is preferably an average level of that compensated digital signal.

The high frequency compensated digital signal may be formed of pre-coded digital information, and the extracting means then may include an encoder, such as a (1+D) encoder, where D is the bit interval of the digital signal.

In a preferred embodiment of this invention, a serial digital signal that has been recorded on a magnetic medium in pre-coded form 1/(1-D²) is recovered by reproducing the pre-coded digital signal from the magnetic medium, equalising the reproduced digital signal by high frequency compensation equalising, encoding the reproduced equalised digital signal to produce a (1+D) encoded digital signal, extracting an intercode interference component from the encoded digital signal, and subtracting the extracted intercode interference component from the reproduced pre-coded digital signal that has been waveform corrected to reduce interbit interference therein. As a result, a waveform equalised signal is produced, and this signal is supplied to a correlation decoder which recovers the original digital signal as a function of the correlation of samples of the waveform equalised signal.

As a further feature of the aforementioned embodiment, waveform correction to reduce interbit interference includes encoding the reproduced digital signal by a (1+D) encoder.

As yet another feature of this embodiment of the invention, intercode interference is extracted from the (1+D) encoded, equalised digital signal by selecting therefrom bits which precede and succeed, respectively, a predetermined bit, weighting those selected bits, and summing the weighted bits to produce the intercode interference components.

The preferred embodiment of the present invention provides apparatus having an improved error rate for regenerating a coded digital signal having superimposed high frequency noise. The apparatus can be used to recover digital signals from a digital transmission system.

The preferred apparatus can recover, with improved error rate, digital information that is reproduced from a digital storage system.

The preferred embodiment of this invention can minimise high frequency noise in a digital signal recovered from a magnetic medium and supplied to a correlation decoder. The accuracy and, thus, the error rate, of the correlation decoder, when used to recover a digital signal reproduced from a magnetic medium, can be improved.

The invention will now be described by way of example with reference to the accompanying drawings, throughout which like parts are referred to by like references, and in which:
Figure 1 is a block diagram of a digital transmission system which exhibits problems addressed by the present invention;
Figure 2 is a block diagram of magnetic recording/reproducing apparatus which exhibits performance degradation;
Figures 3A to 3F are waveform diagrams which are useful in understanding the operation of the system shown in Figure 2;
Figure 4 in is a block diagram of one embodiment of the present invention;
Figures 5A to 5E are waveform diagrams which are useful in understanding the operation of the circuit shown in Figure 4;
Figure 6 is a graphical representation of the error characteristics of a correlation decoder; and
Figure 7 is a block diagram of a simplified embodiment of the present invention.

Before describing the present invention, reference is made to Figure 1 which illustrates a digital transmission system in which high frequency noise interferes with successful recovery of digital information transmitted thereover. The digital transmission system includes a transmission line 34, as may be used to communicate digital data from one location to another, coupled to a transmitter 33 to which digital data is supplied via an input terminal 33a. This digital data is pre-coded by the transmitter 33, and a pre-coded digital signal train, such as a serial bit train, is applied to the transmission line 34 by a transmitter output terminal 33b.

Digital signals transmitted over the transmission line 34 are supplied to an input terminal 35a of a receiver 35 which functions to recover the original digital data. Broadly, the receiver 35 includes a linear equaliser 36 which carries out high frequency compensation on the received digital signals. The compensated digital signals are demodulated by a demodulator 37 which is designed to match the characteristics of the transmission line 34. As will be recognised, the demodulator 37 is complementary to the encoder or modulator used at the transmitter 33 to encode or modulate the transmitted digital data. Once demodulated, the digital signals are supplied to a correlation decoder shown, for example, as a Viterbi decoder 38. The output of the decoder 38 at a terminal 35b is expected to be the original digital data that had been supplied to the input terminal 33a.

One example of a digital transmission system is a digital recording/reproducing system of the type shown broadly in Figure 2. Here, digital information is recorded on a magnetic medium 46, such as a magnetic tape. The characteristics of the magnetic medium are taken into account by the recording and reproducing apparatus which may be thought of as a partial response class IV system, such as described in Kobayashi et al. "Application of Partial Response Channel Coding to Magnetic Recording Systems," IBM Journ. of Res. and Dev., July 1970, p. 368 et seg., or in Newly et al., "The Effects of Nonlinear Distortion on Class IV Partial Response," IEEE Trans. of Magnetics, Vol. Mag 22, No. 5, Sept. 1986, p. 1203 et seq.

The recorder of the system includes an input terminal 41 which receives a digital signal that has been processed to eliminate, or at least substantially minimise, any DC component therein. It is known that a DC component cannot be adequately recorded on a magnetic medium and, thus, this component is removed to minimise distortion. This input digital signal Sa is subjected to pre-coding having a transfer characteristic of 1/(1-D²), where D is a bit interval (or bit cell period) of the input digital signal. This pre-coding is carried out by an adder 42 whose output is fed back to an input thereof by a two-bit delay circuit 43. It will be appreciated that the adder 42 carries out modulo 2 addition, that is, an exclusive OR operation.

The 1/(1-D²) pre-coded digital signal is amplified by a recording amplifier 44 and recorded on the magnetic medium 46 as a pre-coded signal Sb by a suitable recording head 45. The recorded signal is subsequently reproduced by a reproducing head 47. It will be seen that the combination of the magnetic medium 46 and the recording and reproducing heads 45,47 is analogous to the aforedescribed transmission line 34, and the precoder and the amplifier 44 are analogous to the aforedescribed transmitter 33. Signal recovery apparatus analogous to the aforedescribed receiver 35 comprises a reproducing amplifier 48 which supplies the reproduced pre-coded digital signal from the reproducing head 47 to the equaliser 36.

The recording head 45, the magnetic medium 46 and the reproducing head 47 constitute an electromagnetic conversion system exhibiting a transfer characteristic (1-D). Accordingly, the pre-coded digital signal Sb is subject to (1-D) transformation, resulting in a reproduced signal Sc. This reproduced signal is high frequency compensated by the linear equaliser 36, resulting in a compensated signal Sd. The compensated signal Sd is encoded by the combination of an adder 50, which receives the high frequency compensated signal Sd directly from the linear equaliser 36, and a one-bit delay circuit 51, which delays that compensated signal Sd and adds it to the undelayed signal.

The output Se of the resulting (1+D) encoder is seen to have been subjected to the pre-coding of the recording circuit, to the (1-D) transformation of the electromagnetic conversion system, and to the (1+D) encoding of the adder 50 and the delay circuit 51. The combination of this pre-coding, electromagnetic transformation and encoding may be expressed as follows:$\text{1/(1-D²) x (1-D) x (1+D) = 1.}$
Thus, by reason of the pre-coding and encoding, the characteristics of the electromagnetic conversion system are compensated, resulting in an overall transfer function of unity. The resultant signal Se produced by the (1+D) encoder is a three-level signal which is decoded into a two-level digital signal by the Viterbi decoder 38. That is, the three-level signal Se is correlated to recover the original digital information Sf where, ideally, Sf = Sa.

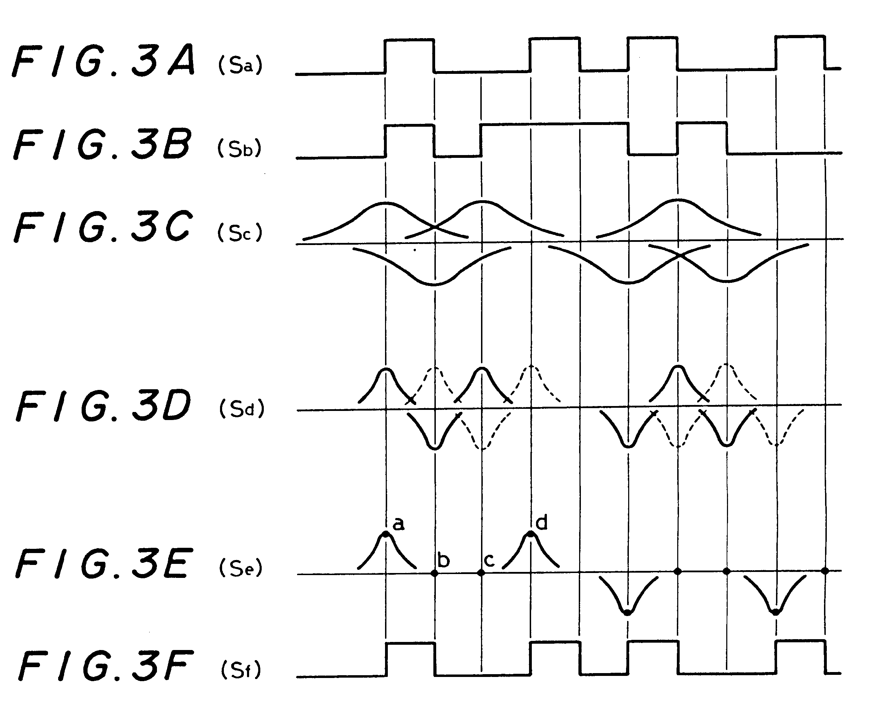

The manner in which the recording/reproducing apparatus shown in Figure 2 operates will best be appreciated by referring to the waveform diagrams shown in Figures 3A to 3F. Figure 3A represents the original input digital signal Sa, and Figure 3B represents the pre-coded digital signal Sb, where Sb = Sa [1/(1-D²)].

The pre-coded signal Sb is subject to inherent (1-D) transformation by the differentiating characteristics of the electromagnetic conversion system, resulting in a signal which is best represented by the superimposed components shown in Figure 3C. These components appear as gradual positive and negative pulses produced by the positive and negative transitions of the pre-coded signal Sb. It will be recognised that the frequency characteristics of the electromagnetic conversion system are primarily responsible for the wave shapes of the individual, superimposed components shown in Figure 3C. These wave shapes are particularly influenced by the presence or absence of high frequency components in the electromagnetic conversion system. In a system having relatively few high frequency components, the wave shapes of the superimposed components are smooth, as shown in Figure 3C. However, the interbit interference of these individual components adversely affects some codes which are used to represent and record the original input digital signal. These components also adversely affect the operation of a decoder used to recover the reproduced signal Sc.

The linear equaliser 36 functions to emphasise the high frequency components which are included in the superimposed components of Figure 3C. That is, the equaliser performs high frequency compensating equalisation to compensate the frequency characteristics of the electromagnetic conversion system. The frequency compensated signal Sd is shown by solid lines in Figure 3D. A comparison of Figure 3D with Figure 3C illustrates the higher frequency compensation which is achieved by the linear equaliser 36 in which interbit interference is reduced. This compensated signal Sd is delayed by the one-bit delay circuit 51, resulting in the delayed, compensated signal represented by broken lines in Figure 3D. The adder 50 adds the delayed and undelayed compensated signals, resulting in the summed signal Se shown in Figure 3E. The summed signal Se exhibits positive, negative and zero levels, and this tri-level signal is decoded by the decoder 38. For example, the decoder 38 may produce samples of the tri-level signal Se at sample points a, b, c, d and so on, and these samples are correlated to regenerate the original input signal Sf as shown in Figure 3F.

The decoder 38 is typically designed with the assumption that any noise which may be superimposed on the signal Se is white Gaussian noise. Since white Gaussian noise is not correlatable, that noise generally does not interfere with the correlation operation from which the digital signal Sf is recovered. However, high frequency noise generally may be closely correlated to the tri-level signal Se shown in Figure 3E. Hence, if high frequency information noise is superimposed on to this signal, as may be attributed to the linear equaliser 36, correlation decoding of the signal Se may not result in the accurate recovery of the digital signal Sf. That is, the linear equaliser 36 may emphasise both high frequency information components of the reproduced, superimposed components Sc as well as high frequency noise that may be recovered from the magnetic medium. Consequently, the error rate of the decoder 38 may be unacceptably high when high frequency emphasis is provided by the linear equaliser 36.

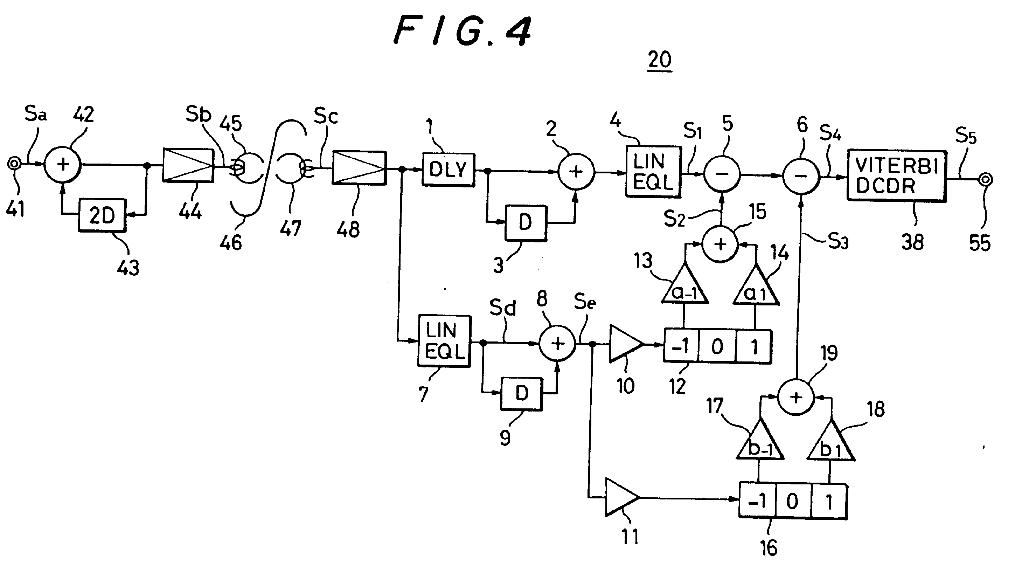

The problem of emphasising both useful information and high frequency noise is avoided by the present invention, one embodiment of which is illustrated in Figure 4. The illustrated embodiment is shown in the environment of a recording/reproducing system, and the same reference numerals are used to identify those elements which have been described previously with respect to Figure 2. The signal Sc (shown in figure 3C) is supplied by the amplifier 48 to a linear equaliser 7 (which may be similar to the high frequency compensating equaliser 36) to produce the emphasised signal Sd which is encoded by a (1+D) encoder formed of an adder 8 and a one-bit delay circuit 9. The equaliser 7, the adder 8 and the delay circuit 9 are substantially the same as the aforedescribed equaliser 36, adder 50, and delay circuit 51 to produce the tri-level signal Se, shown in Figure 3E. An intercode interference component is extracted from the tri-level signal Se and subtracted from the reproduced digital signal Sc to produce an equalised signal which may be decoded by the Viterbi decoder 38 with improved error rate. Although a Viterbi decoder is shown, it should be understood that the present invention need not be limited solely to use with a Viterbi decoder and other decoders which operate in a similar or analogous manner may instead be used.

The reproduced digital signal Sc is supplied through a delay circuit 1 (the purpose of which is described below) to an interbit interference reducing circuit formed as a (1+D) encoder comprising an adder 2 and a one-bit delay circuit 3. The output of the delay circuit 1 is supplied directly to an input of the adder 2 to which a delayed version of this signal is added. The (1+D) encoded signal output from the adder 2 is coupled to a subtracter 5 by a low gain linear equaliser 4. The equaliser in provides low gain high frequency compensation to the (1+D) encoded reproduced digital signal so as to correct its waveform. As will be described below, the subtracter 5 is operable to subtract positive intercede interference components from the corrected waveform signal produced by the linear equaliser 4, and the output of the subtracter 5 is coupled to another subtracter 6 which is operable to subtract negative intercode interference components from the corrected waveform signal. The resultant waveform equalised signal produced by the subtracter 6 is decoded by the Viterbi decoder 38.

Positive intercode interference components are extracted from the signal Se by a comparator 10, a plural stage shift register 12, weighting circuits 13 and 14 and a summing circuit 15. Negative interference intercode components are extracted from the signal Se by a comparator 11, a plural stage shift register 16, weighting circuits 17 and 18 and a summing circuit 19. The comparator 10 is provided with a positive threshold level (not shown) to produce a positive output signal (or bit indications) when the level of the signal Se exceeds this positive threshold. Similarly, the comparator 11 is provided with a negative threshold level (not shown) to produce bit indications when the negative level of the signal Se exceeds this negative threshold. The bit indications from the comparator 10 are clocked into the plural stage shift register 12, of which only three stages are shown. Likewise, the bit indications from the comparator 11 are clocked into the plural stage shift register 16.

A predetermined stage of the shift register 12 is designated as stage 0, a preceding stage is designated as stage -1 and a succeeding stage is designated as stage 1. Similarly, a predetermined stage of the shift register 16 is designated as stage 0, a preceding stage is designated as stage -1, and a succeeding stage is designated as stage 1. Thus, the bits which are shifted through the stages of the shift registers 12 and 16 may be represented as bits -1, 0, and +1, respectively. The contents of stages -1 and +1 of the shift register 12, that is bits -1 and +1, are weighted by the weighting circuits 13 and 14, respectively, and summed in the summing circuit 15. Likewise, the contents of stages -1 and +1 of the shift register 16, that is bits -1 and +1, are weighted by the weighting circuits 17 and 18, respectively, and summed in the summing circuit 19. The summed signal produced by the summing circuit 15 is subtracted in the subtracter 5 from the corrected waveform signal produced by the linear equaliser 4, and the summed signal produced by the summing circuit 19 is subtracted in the subtracter 6 from the output of the subtracter 5.

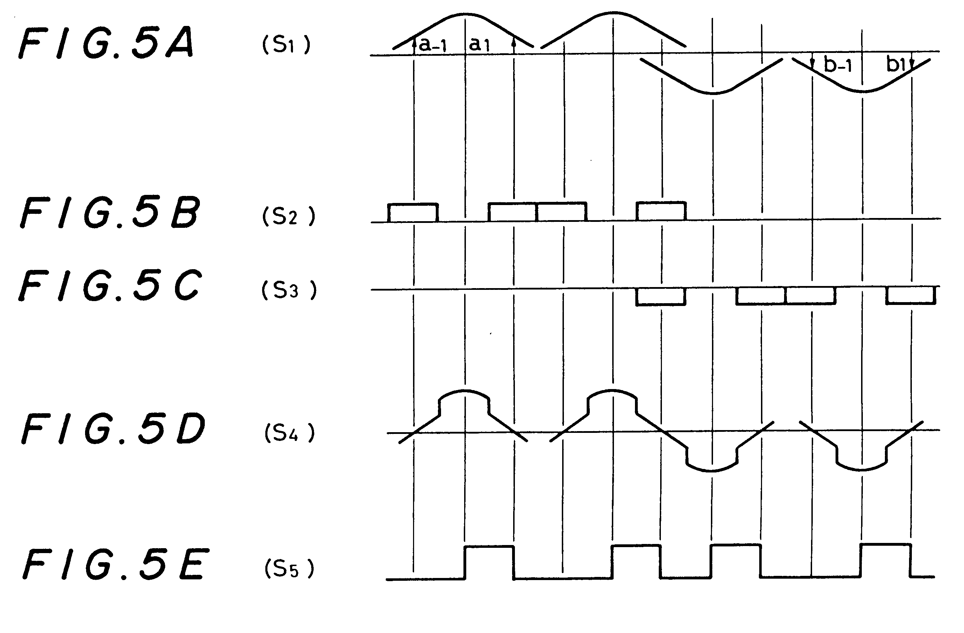

Referring to the waveform diagrams shown in Figures 5A to 5E, as well as the previously described waveform diagrams shown in Figures 3A to 3F, it is assumed that the input digital signal Sa is pre-coded by 1/(1-D²) to produce the pre-coded signal Sb for recording on the magnetic medium 46. When reproduced, the resultant digital signal appears as shown in Figure 3C. The (1+D) encoder formed of the adder 2 and the delay circuit 3 tends to reduce the interbit interference shown in Figure 3C. The linear equaliser 4 provides additional waveform correction, resulting in a waveform-corrected signal S1 shown in Figure 5A.

The reproduced digital signal Sc is subject to high frequency compensation by the linear equaliser 7, resulting in the high frequency compensated signal Sd, shown in Figure 3D. After (1+D) encoding, this high frequency compensated signal appears as shown in Figure 3E. Intercode interference components are subtracted from this (1+D) encoded digital signal Se, resulting in the intercode interference components S2 and S3, shown in Figures 5B and 5C, respectively.

Positive and negative intercode interference components are extracted from the tri-level signal Se by the two similar positive and negative extraction circuits described above. The previously-described weighting circuits 13 and 14 may be formed as amplifiers having gains A₋₁ and A₁, respectively, to amplify bit -1 and bit +1 of the shift register 12 through which bit indications produced by the comparator 10 are shifted. Likewise, the previously-described weighting circuits 17 and 18 may be formed as amplifiers having gains B₋₁ and B₁ for amplifying bit -1 and bit +1 of the shift register 16 through which the bit indications produced by the comparator 11 are shifted. The weighted bits produced by the amplifiers 13 and 14 are summed to produce the intercode interference component shown in Figure 5B, and the weighted bits produced by the amplifiers 17 and 18 are summed in the summing circuit 19 to produce the intercode interference component S3 shown in Figure 5C.

The subtracters 5 and 6 are connected in cascade to receive the waveform-corrected signal S1 as produced by the linear equaliser 4. The subtracter 5 subtracts the positive intercode interference component S2 from the waveform-corrected signal S1 to produce a positive waveform-equalised signal. It is to be appreciated that the negative waveforms of the signal S1 pass through the subtracter 5 without any modification. The subtracter 6 subtracts the negative intercode interference component S3 from the corrected waveform signal S1, the negative waveforms of which pass through the subtracter 5 without modification, resulting in a negative waveform-equalised signal. The composite waveform-equalised signal, that is, the corrected waveform signal from which positive and negative intercode interference components have been removed, is shown in Figure 5D as a waveform-equalised signal S4. This waveform-equalised signal is decoded by the Viterbi decoder 38 which, as mentioned above, samples the waveform-equalised signal and correlates those samples to recover the original digital information, shown as a signal S5 in Figure 5E.

In the embodiment shown in Figure 4, the bit indications which precede and succeed a particular bit indication produced by the comparator 10 (and also by the comparator 11) are weighted and summed to provide the intercode interference component which is subtracted from the waveform-corrected signal S1. If a presently-received bit is loaded into stage -1 of the shift register, then the next preceding bit is stored in stage 0 and the second preceding bit is stored in stage +1. The bit stored in stage 0 is assumed herein to be the particular or predetermined bit indication discussed above. Thus, the predetermined bit indication stored in stage 0 is delayed by one bit period (or bit interval) with respect to the bit indication loaded into stage -1. This delay, together with other inherent delays that may be present in the comparators 10 and 11, is compensated by the delay provided by the delay circuit 1 which is approximately equal to these cumulative delays.

From the foregoing description, it will be seen that high gain high frequency compensating equalisation is provided to extract the intercode interference components. However, the high frequency compensation imparted by the equaliser 4 to the input digital signal from which the intercode interference component is subtracted is of a relatively low gain. Consequently, the resultant waveform-equalised signal S4 is not accompanied by emphasised high frequency noise. Therefore, the correlation of the noise component which accompanies this signal is relatively low, and the Viterbi decoder 38 operates with a relatively low error rate. That is, the noise component which accompanies the waveform-equalised signal is approximately white Gaussian noise.

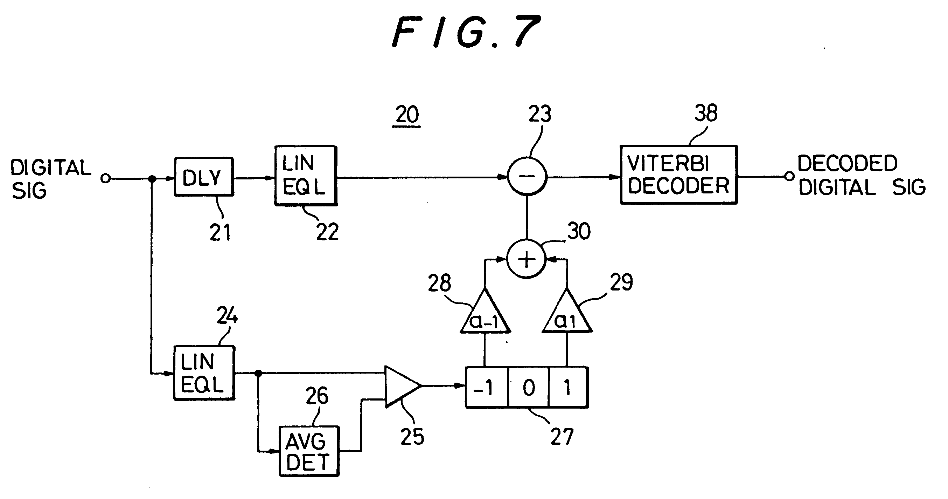

Figure 6 is a graphical representation which best compares the improved error rate attained by the above-described embodiment of the present invention to the error rate attained by the digital data recovery arrangement shown in Figure 2. In particular, Figure 6 represents the relationship between the error rate of the Viterbi decoder 38 (in both Figures 2 and 4) and the signal-to-noise (S/N) ratio of the digital signal supplied to the decoder. Curve A represents the error rate when the intercode interference is cancelled from the reproduced digital signal, as achieved by the embodiment shown in Figure 4. Curve B represents the error rate when high gain high frequency compensation is applied to the input digital signal, as is done in the arrangement shown in Figure 2. Curve C represents the error rate when the digital signal supplied to the Viterbi decoder is accompanied solely by Gaussian noise.

For a given S/N of the Viterbi decoder 38, the error rate achieved by the present embodiment, as represented by a point b, is seen to be only slightly higher than what appears to be the best error rate that can be achieved by the Viterbi decoder, as represented by a point c. This error rate b is seen to be a substantial improvement over the error rate which is achieved for the same S/N by the arrangement shown in Figure 2, as represented by a point a.

The gains or weighting coefficients A₋₁,A₁, B₋₁, and B₁ of the weighting circuits shown in Figure 4 are a function of the wave shapes of the superimposed components which constitute the reproduced digital signal Sc, these components being shown in Figure 3C. Since these components are subjected to a low gain high frequency compensation by the linear equaliser 4, resulting in the corrected waveform S1 shown in Figure 5A, the weighting coefficients are also a function of the compensation provided by the equaliser 4. In theory, this equaliser may be omitted. However, in that event, the weighting coefficients will be increased, and this may produce a significant error when the intercode interference component is subtracted from the recovered digital signal. By including the equaliser 4, these weighting coefficients may be reduced. Thus, the interrelationship between the equaliser 4 and the weighting coefficients is such that an increase in one may be accompanied by a decrease in the other.

The embodiment shown in Figure 4 illustrates a desired arrangement in the environment of a recording/reproducing system. A more general embodiment of the present invention is illustrated in Figure 7, wherein the input digital signal supplied to the interference cancellation equalising arrangement 20 need not be limited solely to that recovered from a magnetic medium.

In the Figure 7 embodiment, the input digital signal is supplied to a subtracter 23, which is analogous to the aforedescribed subtracter 5, by way of a delay circuit 21 and a linear equaliser 22. The delay circuit 21 may be analogous to the aforedescribed delay circuit 1, and the linear equaliser 22 may be analogous to the aforementioned linear equaliser 4. It will be seen that the (1+D) encoder used in the Figure 4 embodiment is not provided in the Figure 7 embodiment.

The intercode interference component is extracted by means of a comparator 25 which is supplied with the high frequency compensated digital signal produced by the linear equaliser 24 (which is substantially similar to the aforedescribed linear equaliser 7) and which receives a threshold level produced by an average level detector 26 derived from the output of the equaliser 24. Thus, the high frequency compensated digital signal provided by the equaliser 24 is assumed to be a two-level signal (rather than the tri-level signal provided by the equaliser 7 in Figure 4) and is compared to a threshold level which is a function of the average amplitude (which may be both positive and negative) of the high frequency compensated digital signal.

Bit indications are produced by the comparator 25 when the high frequency compensated digital signal exceeds the average threshold level produced by the average level detector 26. These bit indications are supplied to and shifted through a shift register 27, which is similar to the aforedescribed shift register 12. Thus, the shift register 27 includes stage -1, stage 0, and stage +1, and weighting circuits 28 and 29 are coupled to stages -1 and +1, respectively, to weight the bit indications in these stages. The weighted bit indications are summed in a summing circuit 30 to produce the intercode interface component which is supplied to the subtracter 23 to be subtracted from the input digital signal. The output of the subtracter 23, which may be similar to the waveform-equalised signal S4 shown in Figure 5D is decoded by the Viterbi decoder 38.

While the present invention has been particularly shown and described with reference to preferred embodiments, it will be readily appreciated that various changes and modifications may be made. For example, a (1+D) encoder formed of the adder 8 and the one-bit delay circuit 9 (Figure 4) may be viewed as a decoder. Also, the waveform correcting circuit comprising the (1+D) encoder formed of the adder 2 and the one-bit delay circuit 3, also including the equaliser 4, are matched to the characteristics of the digital transmission system which, as described in conjunction with Figure 4, comprises an electromagnetic conversion system having the characteristic (1 - D). Precoding of the digital signal before it is transmitted (or recorded) likewise is intended to match the characteristics of the digital transmission system. As the characteristics of this system change, the precoding likewise should be changed as should the characteristics of the encoders used in the data recovery arrangement. Thus, the encoders need not be limited solely to (1+D) encoders. In any event, the present technique provides relatively low gain high frequency emphasis to the waveform equalised digital signal thereby minimising the correlation of the noise component which may be superimposed thereon, and thus permitting correlation and decoding of the digital signal to recover the original digital information.

## Claims

1. Apparatus for regenerating a coded digital signal, the apparatus comprising:
a linear equaliser (7;24) for emphasising high frequency components in an input digital signal (Sc) representing said coded digital signal to produce a high frequency compensated digital signal (Sd); and
a correlation decoder (38) for recovering the original digital signal;
the apparatus being characterised by:
extracting means (8 to 19; 25 to 30) for extracting intercode interference (S2, S3) from said high frequency compensated digital signal (Sd); and
subtracting means (5, 6; 23) for subtracting the intercode interference (S2, S3) from the input digital signal (Sc) to produce a waveform equalised signal (S4);
the correlation decoder (38) being operative to recover the original digital signal by producing and correlating samples of said waveform equalised signal (S4).

2. Apparatus according to claim 1, including input means (41 to 47) for producing said input digital signal (Sc).

3. Apparatus according to claim 2, wherein said input means comprises magnetic reproducing means (47,48) for reproducing said input digital signal (Sc) from a magnetic medium (46).

4. Apparatus according to claim 1, claim 2 or claim 3, wherein said extracting means comprises comparator means (10,11;25) for receiving the high frequency compensated digital signal (Sd) and comparing it with a threshold level to produce a comparator output if the high frequency compensated digital signal (Sd) exceeds said threshold level, plural stage shift register means (12,16;27) for receiving and shifting therethrough the comparator output from said comparator means (10,11;25), and summing means (13 to 15, 17 to 19; 28 to 30) for summing the contents of selected stages of said shift register means (12,16;27).

5. Apparatus according to claim 4, comprising average level detecting means (26) for detecting an average level of said high frequency compensated digital signal (Sd) and supplying said average level to said comparator means (25) as said threshold level.

6. Apparatus according to claim 4, wherein the high frequency compensated digital signal (Sd) is formed of successive bit cells of pre-coded digital information, and said extracting means comprises encoding means (8,9) connected to the linear equalizer (7) for encoding the pre-coded digital information from said compensated digital signal (Sd) and supplying encoded bit cell information (Se) to said comparator means (10,11).

7. Apparatus according to claim 6, wherein said encoding means (8,9) exhibits a transfer characteristic [1+D], wherein D is a bit cell period.

8. Apparatus according to claim 6 or claim 7, wherein said encoding means comprises delay means (9) for delaying the high frequency compensated digital signal (Sd) by a bit cell period, and summing means (8) for summing the delayed and undelayed compensated digital signal.

9. Apparatus according to any one of claims 4 to 8, wherein said comparator means comprises positive and negative comparators (10, 11) for comparing said compensated digital signal (Se) with positive and negative threshold levels to produce respective comparator outputs if the compensated digital signal exceeds said positive or negative threshold levels, said plural stage shift register means comprises respective plural stage shift registers (12, 16) for receiving the comparator outputs from respective ones of the positive and negative comparators (10, 11), and said summing means comprises respective summing circuits (13 to 15, 17 to 19), each for summing the contents of selected stages of a respective shift register (12, 16) to produce respective summed outputs (S2, S3).

10. Apparatus according to claim 9, wherein said input digital signal is a pre-coded digital signal (Sc) reproduced from a magnetic medium (46), and said subtracting means comprises correcting means (1 to 4) for receiving said pre-coded digital signal (Sc) to correct bit interference caused by said magnetic medium (46) and to produce a corrected waveform (S1), and respective subtracters (5,6) connected in cascade to said correcting means (1 to 4), each for receiving a summed output (S2,S3) from a respective summing circuit (13 to 15, 17 to 19) to subtract the summed output (S2,S3) from said corrected waveform (S1) and thereby produce said waveform equalised signal (S4).

11. Apparatus according to claim 10, wherein each summing circuit includes weighting means (13,14; 17,18) for weighting the contents of the selected stages which are summed.

12. Apparatus according to claim 11, wherein said correcting means includes a low gain linear equaliser (4) for applying the corrected waveform (S1) to the cascaded subtracters (5, 6).

13. Apparatus according to claim 12, wherein said input digital signal (Sc) is formed of successive bit cells of pre-coded digital information, and said correcting means includes delay means (3) for delaying said input digital signal (Sc) by a bit cell period, and summing means (2) for summing the delayed and undelayed input digital signal and supplying the summed signal to said low gain linear equaliser (4).

14. Apparatus according to any one of claims 9 to 13, wherein each shift register (12,16) includes a predetermined stage and stages preceding and succeeding said predetermined stage, the contents of said preceding and succeeding stages being supplied to a respective summing circuit (15,19).

15. Apparatus according to claim 14, wherein said preceding and succeeding stages are adjacent said predetermined stage.

16. Apparatus according to claim 1, for regenerating a serial digital signal that has been recorded on a magnetic medium (46) in pre-coded form 1/[1-D²], wherein D is a bit interval of an original serial digital signal (Sa), wherein:
reproducing means (47,48) is provided for reproducing the precoded digital signal from said magnetic medium (46) to produce said input digital signal (Sc), the linear equaliser (7) being connected to said reproducing means (47,48) to receive the input digital signal (Sc);
the extracting means (8 to 19) includes encoding means (8,9) for [1+D] encoding of the reproduced equalised digital signal (Sd), to produce a [1+D] encoded digital signal (Se), and means (10 to 19) connected to said encoding means (8,9) for extracting the intercode interference (S2, S3) from the encoded digital signal (Se); and
the subtracting means comprises means (1 to 4) connected to said reproducing means (47,48) for reducing interbit interference in the input digital signal (Sc) to produce a corrected waveform signal (S1), and means (5,6) for subtracting the extracted intercode interference (S2,S3) from the corrected waveform signal (S1) to produce the waveform equalised signal (S4).

17. Apparatus according to claim 16, wherein said means (1 to 4) for reducing interbit interference in the input digital signal (Sc) includes additional encoding means (2 to 4) for [1+D] encoding of the input digital signal (Sc).

18. Apparatus according to claim 17, wherein said additional encoding means includes low gain equalising means (4) for providing low gain high frequency compensation to the [1+D] encoded signal.

19. Apparatus according to claim 16, claim 17 or claim 18, wherein said extracting means comprises bit selecting means (12,16) for selecting bits that precede and succeed, respectively, a predetermined bit in said encoded digital signal (Se), weighting means (13,14; 17,18) for weighting the selected bits, and summing means (15,19) for summing the weighted bits to produce said intercode interference (S2,S3).

20. Apparatus according to claim 16, claim 17 or claim 18, wherein said extraction means comprises first and second comparator means (10,11) for sensing when the encoded digital signal (Se) exceeds positive and negative threshold levels, respectively, to produce bit indications thereof, first and second plural stage shift register means (12,16) for receiving and shifting therethrough the bit indications produced by said first and second comparator means (10,11), respectively, first and second weighting means (13,14; 17,18) connected to selected stages of said first and second shift register means (12,16), respectively, to weight the bit indications in said selected stages, and first and second summing means (15,19), each for summing the weighted bit indications of the selected stages of a respective shift register means (12,16) to produce a respective intercode interference component (S2,S3).

21. Apparatus according to claim 20, wherein said subtracting means comprises first and second subtracters (5,6) for subtracting the first and second intercode interference components (S2,S3) produced by said first and second summing means (15,19) from said corrected waveform signal (S1).

22. Apparatus according to claim 21, wherein said first and second subtracters (5,6) are connected in cascade.

23. Apparatus according to claim 20, claim 21 or claim 22, wherein said selected stages of said first and second shift register means (12,16) comprise a stage preceding a predetermined stage and a stage succeeding said predetermined stage in each respective shift register means (12,16).

## Patentansprüche

1. Vorrichtung zum Regenerieren eines codierten digitalen Signals, wobei die Vorrichtung umfaßt:
einen linearen Equalizer (7; 24) zum Hervorheben von Hochfrequenzkomponenten in einem das codierte digitale Signal repräsentierenden digitalen Eingangssignal (Sc), um ein hochfrequenzkompensiertes digitales Signal (Sd) zu erzeugen; und
einen Korrelationsdecoder (38) zur Rückgewinnung des ursprünglichen digitalen Signals;
wobei die Vorrichtung gekennzeichnet ist durch:
Ausblendungsmittel (8 bis 19; 25 bis 30) zum Ausblenden einer Zwischencodeinterferenz (S2, S3) aus dem hochfrequenzkompensierten digitalen Signal (Sd); und
Subtraktionsmittel (5, 6; 23) zum Subtrahieren der Zwischencodeinterferenz (S2, S3) aus dem digitalen Eingangssignal (Sc), um ein entzerrtes Wellenformsignal (S4) zu erzeugen;
wobei der Korrelationsdecoder (38) wirksam ist, um das ursprüngliche digitale Signal durch Erzeugen und Korrelieren von Abtastproben des entzerrten Wellenformsignal (S4) zurückzugewinnen.

2. Vorrichtung nach Anspruch 1, welche Eingangsmittel (41 bis 47) zur Erzeugung des digitalen Eingangssignals (Sc) enthält.

3. Vorrichtung nach Anspruch 2, bei welcher die Eingangsmittel magnetische Wiedergabemittel (47, 48) zur Wiedergabe des digitalen Eingangssignals (Sc) von einem magnetischen Träger (46) umfassen.

4. Vorrichtung nach Anspruch 1, 2 oder 3, bei welcher die Ausblendungsmittel Vergleichereinrichtungen (10, 11; 25) zum Empfang des hochfrequenzkompensierten digitalen Signals (Sd) und zum Vergleichen von diesem mit einem Schwellpegel, um ein Vergleicherausgangssignal zu erzeugen, wenn das hochfrequenzkompensierte digitale Signal (Sd) den Schwellpegel überschreitet, mehrstufige Schieberegistereinrichtungen (12, 16; 27) zum Empfang und zum Verschieben des Vergleicherausgangssignals von den Vergleichereinrichtungen (10, 11; 25), und Summiereinrichtungen (13 bis 15, 17 bis 19; 28 bis 30) zum Aufsummieren der Inhalte der ausgewählten Stufen der Schieberegistereinrichtungen (12, 16; 27) umfassen.

5. Vorrichtung nach Anspruch 4, welche Durchschnittspegelfeststellungsmittel (26) zur Feststellung eines Durchschnittspegels des hochfrequenzkompensierten digitalen Signals (Sd) und zur Bereitstellung des Durchschnittspegels als Schwellwertpegel für die Vergleichereinrichtungen (25) umfaßt.

6. Vorrichtung nach Anspruch 4, bei welcher das hochfrequenzkompensierte digitale Signal (Sd) aus aufeinanderfolgenden Bitzellen einer vorcodierten digitalen Information gebildet ist, und die Ausblendungsmittel mit dem linearen Equalizer (7) verbundene Codierungsmittel (8, 9) zur Codierung der vorcodierten digitalen Information aus dem kompensierten digitalen Signal (Sd) und zur Bereitstellung der codierten Bitzelleninformation (Se) für die Vergleichereinrichtungen (10, 11) umfassen.

7. Vorrichtung nach Anspruch 6, bei welcher die Codierungsmittel (8, 9) eine Übertragungscharakteristik [1+D] zeigen, in welcher D eine Bitzellenperiode ist.

8. Vorrrichtung nach Anspruch 6 oder 7, bei welcher die Codierungsmittel Verzögerungsmittel (9) zur Verzögerung des hochfrequenzkompensierten digitalen Signals (Sd) um eine Bitzellenperiode und Summiermittel (8) zum Aufsummieren des verzögerten und des unverzögerten kompensierten digitalen Signals umfassen.

9. Vorrichtung nach einem der Ansprüche 4 bis 8, bei welcher die Vergleichereinrichtung positive und negative Vergleicher (10, 11) zum Vergleichen des kompensierten digitalen Signals (Se) mit positiven und negativen Schwellpegeln umfassen, um jeweils Vergleicherausgangssignale zu erzeugen, wenn das kompensierte digitale Signal die positiven oder negativen Schwellpegel überschreitet, wobei die mehrstufige Schieberegistereinrichtung jeweils mehrstufige Schieberegister (12, 16) zum Empfang der Vergleicherausgangssignale von jeweils einzelnen der positiven und negativen Vergleicher (10, 11) umfaßt, und wobei die Summiermittel jeweils Summierschaltungen (13 bis 15, 17 bis 19) umfassen, von denen jede die Inhalte ausgewählter Stufen eines jeweiligen Schiebregister (12, 16) aufsummiert, um jeweils aufsummierte Ausgangssignale (S2, S3) zu erzeugen.

10. Vorrichtung nach Anspruch 9, bei welcher das digitale Eingangssignal ein vorcodiertes digitales Signal (Sc) ist, welches von einem magnetischen Medium (46) wiedergegeben worden ist, und bei welcher die Subtraktionsmittel Korrekturmittel (1 bis 4) zum Empfang des vorcodierten Signals (Sc) umfassen, um die durch das magnetische Medium (46) verursachte Bitinterferenz zu korrigieren und eine korrigierte Wellenform (S1) zu erzeugen, und bei welcher jeweils in Kaskade geschaltete Subtrahierer (5, 6) mit den Korrekturmitteln (1 bis 4) verbunden sind, wobei jeder einzelne ein aufsummiertes Ausgangssignal (S2, S3) von einer jeweiligen Summierschaltung (13 bis 15; 17 bis 19) empfängt, um das aufsummierte Ausgangssignal (S2, S3) von der korrigierten Wellenform (S1) zu subtrahieren und dadurch das entzerrte Wellenformsignal (S4) zu erzeugen.

11. Vorrichtung nach Anspruch 10, bei welcher jede Summierschaltung Gewichtungsmittel (13, 14; 17, 18) zum Gewichten der Inhalte der ausgewählten Stufen, welche aufsummiert werden, enthält.

12. Vorrichtung nach Anspruch 11, bei welcher die Korrekturmittel einen linearen Equalizer (4) mit niedriger Verstärkung zum Anlegen der korrigierten Wellenform (S1) an die in Kaskade geschalteten Subtrahierer (5, 6) enthalten.

13. Vorrichtung nach Anspruch 12, bei welcher das digitale Eingangssignal (Sc) von aufeinanderfolgenden Bitzellen einer vorcodierten digitalen Information gebildet ist, und bei welcher die Korrekturmittel Verzögerungsmittel (3) zum Verzögern des digitalen Eingangssignals (Sc) um eine Bitzellenperiode und Summiermittel (2) zum Aufsummieren des verzögerten und des unverzögerten digitalen Eingangssignal und zur Bereitstellung des aufsummierten Signals für den linearen Equalizer (4) mit niedriger Verstärkung enthalten.

14. Vorrichtung nach einem der Ansprüche 9 bis 13, bei welcher jedes Schieberegister (12, 16) eine vorgegebene Stufe enthält und Stufen der vorgegebenen Stufe vorausgehen und nachfolgen, wobei die Inhalte der vorausgehenden und nachfolgenden Stufen einer jeweiligen Summierschaltung (15, 19) zugeführt werden.

15. Vorrichtung nach Anspruch 14, bei welcher die vorausgehenden und nachfolgenden Stufen der vorgegebenen Stufe benachbart sind.

16. Vorrrichtung nach Anspruch 1 zum Regenerieren eines seriellen digitalen Signals, welches auf einem magnetischen Medium (46) in vorcodierter Form 1/[1-D²] aufgezeichnet worden ist, worin D ein Bitintervall eines ursprünglichen seriellen digitalen Signals (Sa) ist, bei welcher:
Wiedergabemittel (47, 48) zur Wiedergabe des vorcodierten digitalen Signals von dem magnetischen Medium (46) vorgesehen sind, um das digitale Eingangssignal (Sc) zu erzeugen, wobei der lineare Equalizer (7) mit den Wiedergabemitteln (47, 48) verbunden ist, um das digitale Eingangssignal (Sc) zu empfangen;
die Ausblendungsmittel (8 bis 19) Codierungsmittel (8, 9) zur [1+D]-Codierung des wiedergegebenen entzerrten digitalen Signals (Sd), um ein [1+D]-codiertes digitales Signal (Se) zu erzeugen, und mit den Codierungsmitteln (8, 9) verbundene Mittel (10 bis 19) zum Ausblenden der Zwischencodeinterferenz (S2, S3) aus dem codierten digitalen Signal (Se) enthalten; und
die Subtraktionsmittel mit den Wiedergabemitteln (47, 48) verbundene Mittel (1 bis 4) zur Verringerung der Zwischenbitinterferenz in dem digitalen Eingangssignal (Sc), um ein korrigiertes Wellenformsignal (S1) zu erzeugen, und Mittel (5, 6) zum Subtrahieren der ausgeblendeten Zwischencodeinterferenz (S2, S3) aus dem korrigierten Wellenformsignal (S1), um das entzerrte Wellenformsignal (S4) zu erzeugen, umfassen.

17. Vorrichtung nach Anspruch 16, bei welcher die Mittel (1 bis 4) zur Verringerung der Zwischenbitinterferenz in dem digitalen Eingangssignal (Sc) zusätzliche Codierungsmittel (2 bis 4) zur [1+D]-Codierung des digitalen Eingangssignals (Sc) enthalten.

18. Vorrichtung nach Anspruch 17, bei welcher die zusätzlichen Codierungsmittel Entzerrungsmittel (4) mit niedriger Verstärkung zur Schaffung einer Hochfrequenzkompensation mit niedriger Verstärkung für das [1+D]-codierte Signal enthalten.

19. Vorrichtung nach Anspruch 16, 17 oder 18, bei welcher die Ausblendungsmittel Bitauswahlmittel (12, 16) zur Auswahl von Bits, welche jeweils einem vorgegebenen Bit in dem codierten digitalen Signal (Se) vorausgehen und nachfolgen, Gewichtungsmittel (13, 14; 17, 18) zum Gewichten der ausgewählten Bits und Summiermittel (15, 19) zum Aufsummieren der gewichteten Bits, um die Zwischencodeinterferenz (S2, S3) zu erzeugen, umfassen.

20. Vorrichtung nach Anspruch 16, 17 oder 18, bei welcher die Ausblendungsmittel erste und zweite Vergleichereinrichtungen (10, 11) zur Abfrage, ob das codierte digitale Signal (Se) jeweils positive und negative Schwellpegel überschreitet, um Bitanzeigen davon zu erzeugen, erste und zweite mehrstufige Schieberegistereinrichtungen (12, 16) zum Empang und zum Verschieben der jeweils durch die ersten und zweiten Vergleichsmittel (10, 11) erzeugten Bitanzeigen, erste und zweite jeweils mit ausgewählten Stufen der ersten und zweiten Schieberegistereinrichtungen (12, 16) verbundene Gewichtungsmittel (13, 14; 17, 18), um die Bitanzeigen in den ausgewählten Stufen zu gewichten, und erste und zweite Summiermittel (15, 19) zum Summieren der gewichteten Bitanzeigen der ausgewählten Stufen einer jeweiligen Schieberegistereinrichtung (12, 16), um eine jeweilige Zwischencodeinterferenzkomponente (S2, S3) zu erzeugen, umfassen.

21. Vorrichtung nach Anspruch 20, bei welcher die Subtraktionsmittel erste und zweite Subtrahierer (5, 6) zum Subtrahieren der von den ersten und zweiten Summiermitteln (15, 16) erzeugten ersten und zweiten Zwischencodeinterferenzkomponenten (S2, S3) von dem korrigierten Wellenformsignal (S1) umfassen.

22. Vorrichtung nach Anspruch 21, bei welcher die ersten und zweiten Subtrahierer (5, 6) in einer Kaskade verbunden sind.

23. Vorrichtung nach Anspruch 20, 21 oder 22, bei welcher die ausgewählten Stufen der ersten und zweiten Schieberegistereinrichtungen (12, 16) in jeder einzelnen Schieberegistereinrichtung (12, 16) eine einer vorgegebenen Stufe vorausgehende Stufe und eine der vorgegebenen Stufe nachfolgende Stufe umfassen.

## Revendications

1. Appareil pour régénérer un signal numérique codé, l'appareil comprenant :
un égaliseur linéaire (7 ; 24) pour accentuer des composantes de fréquence élevée dans un signal numérique d'entrée (Sc) représentant ledit signal numérique codé pour produire un signal numérique compensé en fréquence élevée (Sd) ; et
un décodeur de corrélation (38) pour récupérer le signal numérique original ;
l'appareil étant caractérisé par :
un dispositif d'extraction (8 à 19 ; 25 à 30) pour extraire une interférence entre codes (S2, S3) dudit signal numérique compensé en fréquence élevée (Sd) ; et
un dispositif de soustraction (5, 6 ; 23) pour soustraire l'interférence entre codes (S2, S3) du signal numérique d'entrée (Sc) pour produire un signal de forme d'onde égalisé (S4) ;
le décodeur de corrélation (38) étant fonctionnel pour récupérer le signal numérique original en produisant et en corrélant des échantillons dudit signal de forme d'onde égalisé (S4).

2. Appareil selon la revendication 1, comprenant un dispositif d'entrée (41 à 47) pour produire ledit signal numérique d'entrée (Sc).

3. Appareil selon la revendication 2, dans lequel ledit dispositif d'entrée comprend un dispositif de reproduction magnétique (47, 48) pour reproduire ledit signal numérique d'entrée (Sc) à partir d'un support magnétique (46).

4. Appareil selon la revendication 1, la revendication 2 ou la revendication 3, dans lequel ledit dispositif d'extraction comprend un dispositif comparateur (10, 11 ; 25) pour recevoir le signal numérique compensé en fréquence élevée (Sd) et le comparer avec le niveau de seuil pour produire une sortie de comparateur si le signal numérique compensé en fréquence élevée (Sd) dépasse ledit niveau de seuil, un dispositif de registre à décalage à plusieurs étages (12, 16 ; 27) pour recevoir et décaler à travers celui-ci la sortie de comparateur dudit dispositif comparateur (10, 11 ; 25), et un dispositif d'addition (13 à 15, 17 à 19; 28 à 30) pour additionner les contenus des étages sélectionnés dudit dispositif de registre à décalage (12, 16 ; 27).

5. Appareil selon la revendication 4, comprenant un dispositif de détection de niveau moyen (26) pour détecter un niveau moyen dudit signal numérique compensé en fréquence élevée (Sd) et pour fournir ledit niveau moyen audit dispositif comparateur (25) comme ledit niveau de seuil.

6. Appareil selon la revendication 4, dans lequel le signal numérique compensé en fréquence élevée (Sd) est formé de cellules binaires successives d'informations numériques précodées, et ledit dispositif d'extraction comprend un dispositif de codage (8, 9) relié à l'égaliseur linéaire (7) pour coder les informations numériques précodées dudit signal numérique compensé (Sd) et pour fournir des informations de cellule binaire codées (Se) audit dispositif comparateur (10, 11).

7. Appareil selon la revendication 6, dans lequel ledit dispositif de codage (8, 9) montre une caractéristique de transfert [1+D], dans lequel D est une période de cellule binaire.

8. Appareil selon la revendication 6 ou la revendication 7, dans lequel ledit dispositif de codage comprend un dispositif à retard (9) pour retarder le signal numérique compensé en fréquence élevée (Sd) par une période de cellule binaire, et un dispositif d'addition (8) pour additionner le signal numérique compensé retardé et non-retardé.

9. Appareil selon l'une quelconque des revendications 4 à 8, dans lequel ledit dispositif comparateur comprend des comparateurs positifs et négatifs (10, 11) pour comparer ledit signal numérique compensé (Se) avec des niveaux de seuil positifs et négatifs pour produire des sorties de comparateur respectives si le signal numérique compensé dépasse lesdits niveaux de seuil positifs et négatifs, ledit dispositif de registre à décalage à plusieurs étages comprend des registres à décalage à plusieurs étages respectifs (12, 16) pour recevoir les sorties de comparateur des comparateurs positifs et négatifs respectifs (10, 11), et ledit dispositif d'addition comprend des circuits d'addition respectifs (13 à 15, 17 à 19), chacun pour additionner les contenus des étages sélectionnés d'un registre à décalage respectifs (12, 16) pour produire des sorties additionnées respectives (S2, S3).

10. Appareil selon la revendication 9, dans lequel ledit signal numérique d'entrée est un signal numérique précodé (Sc) reproduit à partir d'un support magnétique (46), et ledit dispositif de soustraction comprend un dispositif de correction (1 à 4) pour recevoir ledit signal numérique précodé (Sc) pour corriger une interférence de bit provoquée par ledit support magnétique (46) et pour produire une forme d'onde corrigée (S1), et des dispositifs de soustraction respectifs (5, 6) reliés en cascade audit dispositif de correction (1 à 4), chacun pour recevoir une sortie additionnée (S1, S2) à partir d'un circuit d'addition respectif (13 à 15, 17 à 19) pour soustraire la sortie additionnée (S2, S3) de ladite forme d'onde corrigée (S1) et produire ainsi ledit signal de forme d'onde égalisé (S4).

11. Appareil selon la revendication 10, dans lequel chaque circuit d'addition comprend un dispositif de pondération (13, 14 ; 17, 18) pour pondérer les contenus des étages sélectionnés qui sont additionnés.

12. Appareil selon la revendication 11, dans lequel ledit dispositif de correction comprend un égaliseur linéaire de faible gain (4) pour appliquer la forme d'onde corrigée (S1) aux dispositifs de soustraction en cascade (5, 6).

13. Appareil selon la revendication 12, dans lequel ledit signal numérique d'entrée (Sc) est formé de cellules binaires successives d'informations numériques précodées, et ledit dispositif de correction comprend un dispositif à retard (3) pour retarder ledit signal numérique d'entrée (Sc) d'une période de cellule binaire, et un dispositif d'addition (2) pour additionner le signal numérique d'entrée retardé et non-retardé et pour fournir le signal additionné audit égaliseur linéaire de gain faible (4).

14. Appareil selon l'une quelconque des revendications 9 à 13, dans lequel chaque registre à décalage (12, 16) comprend un étage prédéterminé et des étages précédents et suivants ledit étage prédéterminé, les contenus desdits étages précédents et suivants étant appliqués à un circuit d'addition respectif (15, 19).

15. Appareil selon la revendication 14, dans lequel lesdits étages précédents et suivants sont voisins dudit étage prédéterminé.

16. Appareil selon la revendication 1, pour générer un signal numérique en série qui a été enregistré sur un support magnétique (46) sous forme précodée 1/[1-D²], dans laquelle D est un intervalle binaire d'un signal numérique en série original (Sa) dans lequel :
un dispositif de reproduction (47, 48) est fourni pour reproduire le signal numérique précodé à partir dudit support magnétique (46) pour produire ledit signal numérique d'entrée (Sc), l'égaliseur linéaire (7) étant relié audit dispositif de reproduction (47, 48) pour recevoir le signal numérique d'entrée (Sc) ;
le dispositif d'extraction (8 à 19) comprend un dispositif de codage (8, 9) pour le codage [1+D] du signal numérique reproduit égalisé (Sd), pour produire un signal numérique codé [1+D] (Se), et un dispositif (10 à 19) relié audit dispositif de codage (8, 9) pour extraire l'interférence entre codes (S2, S3) du signal numérique codé (Se) ; et
le dispositif de soustraction comprend un dispositif (1 à 4) relié audit dispositif de reproduction (47, 48) pour réduire une interférence entre bits dans le signal numérique d'entrée (Sc) pour produire un signal de forme d'onde corrigé (S1), et un dispositif (5, 6) pour soustraire l'interférence entre codes extraite (S2, S3) du signal de forme d'onde corrigé (S1) pour produire le signal de forme d'onde égalisé (S4).

17. Appareil selon la revendication 16, dans lequel ledit dispositif (1 à 4) pour réduire une interférence entre bits dans le signal numérique d'entrée (Sc) comprend un dispositif de codage supplémentaire (2 à 4) pour le codage [1+D] du signal numérique d'entrée (Sc).

18. Appareil selon la revendication 17, dans lequel ledit dispositif de codage supplémentaire comprend un dispositif d'égalisation de faible gain (4) pour fournir une compensation de fréquence élevée de faible gain au signal codé [1+D].

19. Appareil selon la revendication 16, la revendication 17, ou la revendication 18, dans lequel ledit dispositif d'extraction comprend un dispositif de sélection de bit (12, 16) pour sélectionner des bits qui précèdent et suivent, respectivement un bit prédéterminé dans ledit signal codé (Se), un dispositif de pondération (13, 14 ; 17, 18) pour pondérer les bits sélectionnés, et un dispositif d'addition (15, 19) pour additionner les bits pondérés pour produire ladite interférence entre codes (S2, S3).

20. Appareil selon la revendication 16, la revendication 17 ou la revendication 18, dans lequel ledit dispositif d'extraction comprend des premier et second dispositifs comparateurs (10, 11) pour détecter lorsque le signal numérique codé (Se) dépasse respectivement des niveaux de seuil positifs et négatifs, pour produire des indications binaires de celui-ci, des premier et second dispositifs de registre à décalage à plusieurs étages (12, 16) pour recevoir et décaler à travers celui-ci des indications binaires produites respectivement par lesdits premier et second dispositifs comparateurs (10, 11), des premier et second dispositifs de pondération (13, 14 ; 17, 18) reliés aux étages sélectionnés respectivement desdits premier et second dispositifs de registre à décalage (12, 16), pour pondérer les indications binaires dans lesdits étages sélectionnés, et des premier et second dispositifs d'addition (15, 19), chacun pour additionner les indications binaires pondérées de étages sélectionnés d'un dispositif de registre à décalage respectif (12, 16) pour produire une composante d'interférence entre codes respective (S2, S3).

21. Appareil selon la revendication 20, dans lequel ledit dispositif de soustraction comprend des premier et second dispositifs de soustraction (5, 6) pour soustraire les première et seconde composantes d'interférence entre codes (S2, S3) produites par lesdits premier et second dispositifs d'addition (15, 19) à partir dudit signal corrigé de forme d'onde (S1).

22. Appareil selon la revendication 21, dans lequel lesdits premier et second dispositifs de soustraction (5, 6) sont reliés en cascade.

23. Appareil selon la revendication 20, la revendication 21, ou la revendication 22, dans lequel lesdits étages sélectionnés desdits premier et second dispositifs de registre à décalage (12, 16) comprennent un étage précédant un étage prédéterminé et un étage suivant ledit étage prédéterminé dans chaque dispositif de registre à décalage respectif (12, 16).
